# EUROPEAN PATENT APPLICATION

(11) **EP 4 714 756 A1**
(43) Date of publication of application: **25.03.2026**
(21) Application number: 25198936.4
(22) Date of filing: 29.08.2025
(51) Int. Cl.: B60R 25/24, G07C 9/00

(54) **VEHICLE DOOR CONTROL DEVICE**

(30) Priority: 24.09.2024 JP 2024165122
(71) Applicant: AISIN CORPORATION, Aichi 448-8650 (JP)
(72) Inventor: MIZOKAWA, Yoshihiro, Kariya, Aichi, 448-8650 (JP)
(74) Representative: TBK

(57) **Abstract**

A vehicle door control device (1) includes: a position detection unit (31A) configured to detect a position of a key of a vehicle; a person detection unit (31B) configured to detect a person present around the vehicle; and a control unit (31C) configured to execute control for opening a door of the vehicle based on detection by the position detection unit that the key of the vehicle is present within a range of a predetermined distance from the vehicle and detection by the person detection unit that the person is present at the position of the key of the vehicle detected by the position detection unit.

## Description

### TECHNICAL FIELD

This disclosure relates to a vehicle door control device that controls a door of a vehicle.

### BACKGROUND DISCUSSION

JP 2022-524731A (Reference 1) describes a door lock-release method for releasing door locking of a vehicle and opening a door based on face authentication. In the door lock-release method of Reference 1, a distance between an object outside the vehicle and an infrared ranging sensor is continuously acquired by the infrared ranging sensor. Next, in response to the acquired distance gradually decreasing and a duration time, in which the distance is equal to or less than a first distance threshold, reaching a first time threshold, an image collection module disposed in the vehicle is controlled to collect a video stream. The face authentication is performed based on an image of the collected video stream, and the door locking of the vehicle is released in response to successful face authentication.

In the door lock-release method of Reference 1, a user can release the door locking by approaching the vehicle and causing the vehicle to image the face. However, in collation by face authentication, it is necessary to register the face of the user to be collated in the face authentication in advance. Therefore, there is a problem that a user who is not registered, such as a user different from the user who usually uses the vehicle, cannot succeed in the face authentication and cannot release the door locking of the vehicle.

A need thus exists for a vehicle door control device capable of controlling a door of a vehicle based on a position of a key without requiring user registration in advance.

### SUMMARY

According to an aspect of this disclosure, a vehicle door control device includes:
a position detection unit configured to detect a position of a key of a vehicle;
a person detection unit configured to detect a person present around the vehicle; and
a control unit configured to execute control for opening a door of the vehicle based on detection by the position detection unit that the key of the vehicle is present within a range of a predetermined distance from the vehicle and detection by the person detection unit that the person is present at the position of the key of the vehicle detected by the position detection unit.

The control for opening the door in the present specification is a concept including control for releasing locking of the door, control for opening the door, or control for executing both of them.

According to the vehicle door control device of the disclosure having the above configuration, the control for opening the door is executed based on the detection that the key is present within the range of the predetermined distance from the vehicle and the person is present at the position of the key. Accordingly, an owner of the vehicle, the family thereof, or the like can cause the vehicle to execute the control for opening the door only by carrying the key to approach the vehicle. The door of the vehicle can be controlled based on the position of the key without registering face data for face authentication in advance.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to a first embodiment;
Fig. 2 is a block diagram showing a configuration of a vehicle door control device according to the first embodiment;
Fig. 3 is a flowchart showing a door control processing program according to the first embodiment;
Fig. 4 is a plan view showing a behavior of a user carrying a portable device and a range of a threshold distance from the vehicle;
Fig. 5 is a plan view showing a positional relationship among the vehicle parked in a site of a home, the user who is an owner of the vehicle, and the portable device;
Fig. 6 is a plan view showing the positional relationship among the vehicle parked in the site of the home, the user who is the owner of the vehicle, and the portable device;
Fig. 7 is a plan view showing the positional relationship among the vehicle parked in the site of the home, the user who is the owner of the vehicle, and the portable device; and
Fig. 8 is a flowchart showing a door control processing program according to a second embodiment.

### DETAILED DESCRIPTION

### First Embodiment

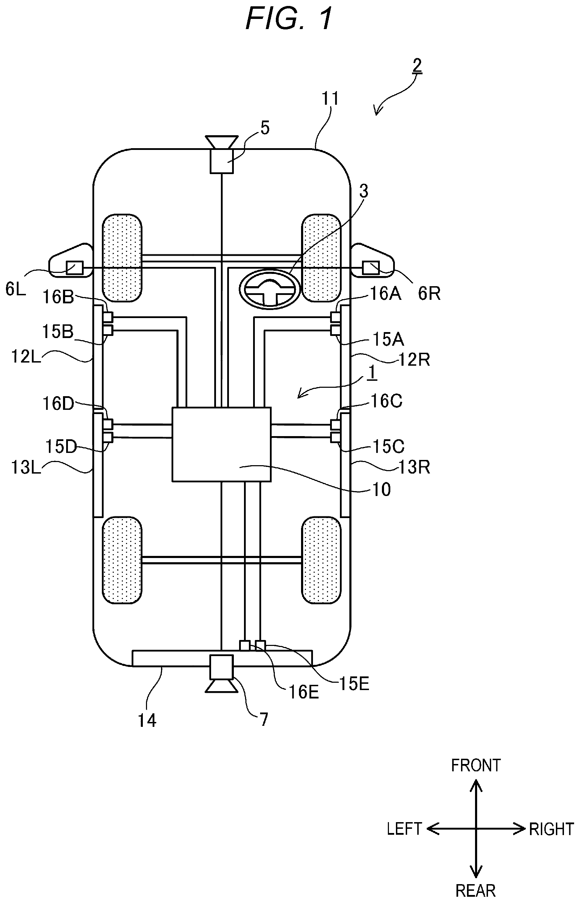

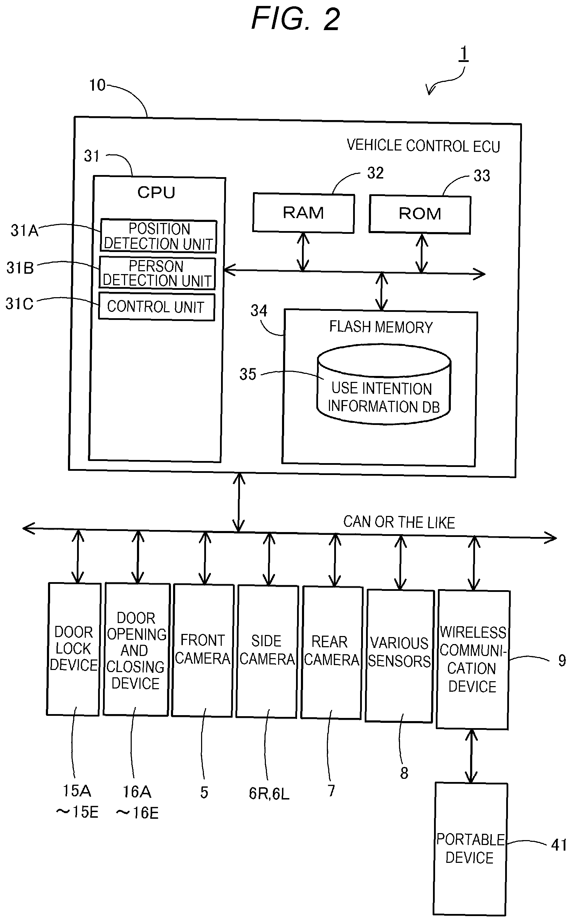

Hereinafter, a vehicle door control device according to an embodiment disclosed here will be described in detail with reference to the drawings. First, a vehicle 2 equipped with a vehicle door control device 1 according to a first embodiment will be described below. Fig. 1 is a schematic configuration diagram of the vehicle 2 according to the first embodiment. Fig. 2 is a block diagram showing the vehicle door control device 1 according to the first embodiment. In the following description, a front-rear direction of the vehicle 2, a left-right direction of the vehicle 2, and an up-down direction of the vehicle 2 are simply referred to as a front-rear direction, a left-right direction, and an up-down direction, respectively. A reference sign of a device or the like on a right side of the vehicle 2 may be denoted by R, and a reference sign of a device or the like on a left side of the vehicle 2 may be denoted by L. In addition to the components shown in Figs. 1 and 2, the vehicle 2 also includes basic components of the vehicle 2. However, the following description will mainly focus on the configuration related to control for opening and closing of doors, and control related to the configuration.

As shown in Fig. 1, the vehicle 2 is, for example, a vehicle having a handle 3 on the right side, and includes a vehicle body 11, a front door 12R on a driver's seat side, a front door 12L on a passenger's seat side, a rear door 13R on the driver's seat side, a rear door 13L on the passenger's seat side, and a back door 14. Hereinafter, the front doors 12R and 12L, the rear doors 13R and 13L, and the back door 14 may be collectively referred to as doors. Each door is, for example, a swing type door. The vehicle 2 includes door lock devices 15A, 15B, 15C, 15D, and 15E that control locking of the respective doors, and door opening and closing devices 16A, 16B, 16C, 16D, and 16E that open and close the respective doors. The door lock devices 15A to 15E control locking of the front doors 12R and 12L, the rear doors 13R and 13L, and the back door 14 in this order. The door lock devices 15A to 15E are devices that switch the respective doors between a locked state where the door is locked and a lock-release state where the door is unlocked. The door opening and closing devices 16A to 16E are devices that open and close the front doors 12R and 12L, the rear doors 13R and 13L, and the back door 14 in this order. Each of the door opening and closing devices 16A to 16E includes, for example, a motor as a drive source, and opens and closes each door by driving the motor.

A configuration of the vehicle 2 shown in Fig. 1 is an example. For example, the vehicle 2 is not limited to the vehicle having the handle 3 on the right side, and may be a vehicle having the handle 3 on the left side. In addition, each door is not limited to the swing type door, and other opening and closing type doors such as a slide door can be adopted. The doors may be opened and closed in different manners. Therefore, only the rear doors 13R and 13L may be slide doors. The drive source of the door opening and closing devices 16A to 16E is not limited to the motor, and may be another drive source such as a hydraulic cylinder. The vehicle 2 may be an internal combustion engine automobile using an internal combustion engine (engine or the like) as a drive source, an electric vehicle using an electric motor as the drive source, a fuel cell vehicle, or a hybrid vehicle having a plurality of drive sources thereof. A vehicle type, the number of wheels, or the like of the vehicle 2 are not particularly limited. The vehicle 2 may be a vehicle capable of manual driving, a vehicle capable of autonomous driving, or a vehicle capable of switching between manual driving and autonomous driving.

As shown in Figs. 1 and 2, the vehicle door control device 1 includes a front camera 5, side cameras 6R and 6L, a rear camera 7, various sensors 8, a wireless communication device 9, and a vehicle control electronic control unit (ECU) 10. Hereinafter, the front camera 5, the side cameras 6R and 6L, and the rear camera 7 may be collectively referred to as cameras.

Each camera is, for example, an imaging device having a solid-state imaging element such as a CCD, and captures an image around the vehicle. The front camera 5 is attached to, for example, an upper side of a front bumper of the vehicle 2 and a back side of a room mirror, and is disposed in a state where an optical axis direction is directed to the front of the vehicle 2. The side cameras 6R and 6L are attached to, for example, left and right side mirrors of the vehicle 2, respectively, and are disposed in a state where an optical axis direction is directed to a side of the vehicle 2. The rear camera 7 is attached above a license plate mounted on the rear side of the vehicle 2, for example, and is disposed in a state where an optical axis direction is directed to the rear of the vehicle 2. Each camera is an example of a person detection unit in the present specification.

The various sensors 8 are sensors for implementing various functions of the vehicle 2. As the sensor 8, for example, an ultrasonic sensor, a millimeter wave radar, and a laser sensor may be used as a sensor for detecting an obstacle around the vehicle. Alternatively, the sensor 8 may be a vehicle speed sensor, an acceleration sensor, a gyro sensor, a steering sensor, a shift position sensor, or the like, as a sensor used for traveling of the vehicle 2.

The wireless communication device 9 is a device that executes wireless communication with a portable device 41. The portable device 41 is, for example, a so-called electronic key. Alternatively, the portable device 41 may be a smartphone used in a digital key system, or may be another communication terminal capable of wirelessly communicating with the vehicle 2. The portable device 41 includes buttons for operating the door lock devices 15A to 15E and the door opening and closing devices 16A to 16E. The portable device 41 is an example of a key in this specification.

### Vehicle Control ECU 10

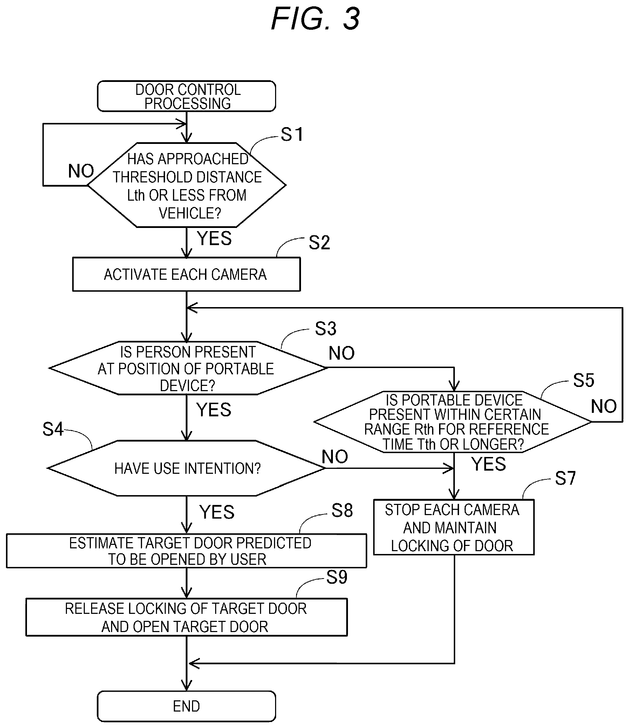

The vehicle control ECU (hereinafter, simply referred to as an ECU) 10 is an electronic control unit that comprehensively controls the entire vehicle 2 including the vehicle door control device 1. The vehicle control ECU 10 includes a CPU 31 serving as a calculation device and a control device, and internal storage devices such as a RAM 32 used as a working memory when the CPU 31 executes various kinds of calculation processing, a ROM 33 in which a door control processing program (see Fig. 3) to be described later or the like are stored in addition to a control program, and a flash memory 34 that stores a program and a flag value read from the ROM 33.

The ECU 10 implements various functional units by executing programs in the CPU 31. For example, a position detection unit 31A is a functional unit that detects a position of a key of the vehicle 2. A person detection unit 31B is a functional unit that detects a person present around the vehicle 2. A control unit 31C is a functional unit that executes control for opening the door based on a fact that the position detection unit 31A detects that the key of the vehicle 2 is present within a range of a predetermined distance from the vehicle 2 and the person detection unit 31B detects that a person is present at the position of the key of the vehicle 2 detected by the position detection unit 31A. That is, the vehicle control ECU 10 is an example of a position detection unit, a person detection unit, and a control unit in the present specification.

A use intention information DB 35 is stored in the flash memory 34. The use intention information DB 35 stores information for determining whether a user around the vehicle has an intention to use the vehicle 2 (a threshold for determining an operation, information for determining based on imaging data, or the like).

The ECU 10 is connected to the door lock devices 15A to 15E, the door opening and closing devices 16A to 16E, the cameras (the front camera 5 or the like), the various sensors 8, and the wireless communication device 9, which are described above, via an in-vehicle network such as a CAN. The ECU 10 executes various calculations based on information received from each camera and each sensor 8, and controls the vehicle 2. For example, the ECU 10 displays a bird's-eye view image or an overhead image on a monitor (not shown) of the vehicle 2 based on imaging data captured by each camera, and executes driving assistance.

The ECU 10 drives the door lock devices 15A to 15E and the door opening and closing devices 16A to 16E to control locking (key) of each door and opening and closing of the door. The ECU 10 executes wireless communication with the portable device 41 via the wireless communication device 9, and executes key authentication, lock-release of each door, opening and closing of the door, or the like according to the button operated on the portable device 41. Processing such as the key authentication and the locking of a door may be executed by a device other than the ECU 10, for example, the wireless communication device 9.

### Regarding Door Control Processing Program

Next, the door control processing program executed by the ECU 10 in the vehicle door control device 1 having the above-described configuration will be described with reference to Fig. 3. Fig. 3 is a flowchart of the door control processing program according to the first embodiment. Here, for example, when the ECU 10 detects radio waves from the portable device 41 in a state where an engine of the vehicle 2 is stopped and all the doors are locked, the ECU 10 starts the door control processing program. The door control processing program is a program for executing control for opening a door (hereinafter referred to as a target door) predicted to be opened by the user when it is detected that the user is present at the position of the key and it is determined that the user has an intention (hereinafter referred to as a use intention) to use the vehicle 2. In the following description, a case where control for releasing the locking and opening the target door is executed as the control for opening the door will be described.

The "control for opening the door" in the present specification may be control for releasing the locking of each door or control for opening each door. Therefore, the ECU 10 may execute only the control for releasing the locking of the target door in S9 of Fig. 3 described later. A condition for starting the execution of the door control processing program is not limited to the above-described condition. For example, the ECU 10 may execute the processing of Fig. 3 in a state where the engine of the vehicle 2 is stopped and the locking of all the doors is released. In this case, in S9, the ECU 10 may execute only the control for opening the target door whose locking has already been released. That is, as the "control for opening the door" in the present specification, only the control for opening the target door may be executed. Alternatively, the ECU 10 may start the processing of Fig. 3 when a change in a position of the portable device 41 is detected. The ECU 10 may start the processing of Fig. 3 at predetermined intervals. The program described below and shown in the flowchart in Fig. 3 is stored in the RAM 32 or the ROM 33 provided in the vehicle door control device 1, and is executed by the CPU 31.

First, in step (hereinafter abbreviated as S) 1 of Fig. 3, the CPU 31 determines whether the portable device 41 has approached the vehicle 2 to a predetermined threshold distance Lth or less. While the portable device 41 does not approach to the threshold distance Lth, that is, while a distance between the vehicle 2 and the portable device 41 is longer than the threshold distance Lth, the CPU 31 makes a negative determination in S1 (S1: NO), and repeatedly executes determination processing of S1. When the CPU 31 detects that the portable device 41 has approached to the threshold distance Lth or less (S1: YES), the CPU 31 executes S2 and activates the cameras (the front camera 5, the side cameras 6R and 6L, and the rear camera 7). For example, the CPU 31 stops power supply to each camera and stops each camera until S2 is executed. In S2, the CPU 31 starts power supply to each camera and acquires imaging data from each camera in a state where imaging is possible.

The threshold distance Lth is, for example, several meters. As will be described later, after the portable device 41 approaches to the threshold distance Lth or less (S1: YES), the CPU 31 determines whether a person is present at the position of the portable device 41 based on the imaging data of each activated camera, and executes the control for opening the target door when the person is present at the position of the portable device 41 and has a use intention. Therefore, the threshold distance Lth is preferably a distance such as 5 m to 3 m that can secure a time required for checking a position of the person, checking the use intention, and estimating the target door. As a method of acquiring position information of the portable device 41, for example, a method of acquiring the position of the portable device 41 using triangulation based on a distance between each of a plurality of wireless antennas of the wireless communication device 9 and the portable device 41 can be adopted. The position of the portable device 41 may be detected based on position information of a smartphone of the digital key system. After detecting the radio waves of the portable device 41 and starting the processing of Fig. 3, the CPU 31 may end the processing shown in Fig. 3 when the portable device 41 does not approach to the threshold distance Lth or less and the negative determination is repeated for a certain time in S1 (S1: NO). In this case, the CPU 31 may resume the processing of Fig. 3 after a certain time elapses or when the position of the portable device 41 is changed.

After activating each camera in S2, the CPU 31 determines whether a person is present at the position of the portable device 41 in S3. For example, the CPU 31 determines whether a person is present at the position of the portable device 41 based on the imaging data captured by each camera. The CPU 31 performs image processing on the imaging data obtained by imaging the position of the portable device 41 based on the position information of the portable device 41, and determines whether a person is present at the position of the portable device 41. For example, the CPU 31 may determine whether a person is present by extracting a feature of an image obtained by the image processing and determining whether a motion or a shape of a person can be detected from the image. Alternatively, the CPU 31 may determine whether a person is present at the position of the portable device 41 by analyzing the image using artificial intelligence (AI) technology. The method of determining whether a person is present at the position of the portable device 41 is not limited to the method using the imaging data of each camera. For example, the CPU 31 may determine whether a person is present at the position of the portable device 41 using point cloud data of a millimeter wave radar mounted on the vehicle 2. Therefore, the person detection unit of the present specification may be a millimeter wave radar. The CPU 31 may determine whether a person is present at the position of the portable device 41 using both the camera and the millimeter wave radar. The CPU 31 may limit the camera to be activated according to the position of the portable device 41. For example, when the portable device 41 is present in front of the vehicle 2, the rear camera 7 may not be activated. The camera to be activated according to the position of the portable device 41 may be changed to save power.

When a person cannot be detected from the imaging data obtained by imaging the position of the portable device 41 (S3: NO), the CPU 31 executes S5. In S5, the CPU 31 determines whether the portable device 41 continues being present within a certain range Rth for a predetermined reference time Tth or longer. When it is determined that the portable device 41 continues being present within the certain range Rth for the predetermined reference time Tth or longer (S5: YES), the CPU 31 executes S7. In S7, the CPU 31 stops each camera and maintains the locking of each door. For example, the CPU 31 stops the power supplied to each camera and stops each camera. As will be described later, the reference time Tth and the certain range Rth in S5 are a time and a range necessary for determining a state where the user accidentally drops and leaves the portable device 41, a state where the user has no use intention on the vehicle 2 and the user stops near the vehicle 2, or the like. Therefore, the reference time Tth and the certain range Rth in S5 are a time and a range that can detect a state where the dropped portable device 41 is left or a state where the user carrying the portable device 41 stays at a certain place.

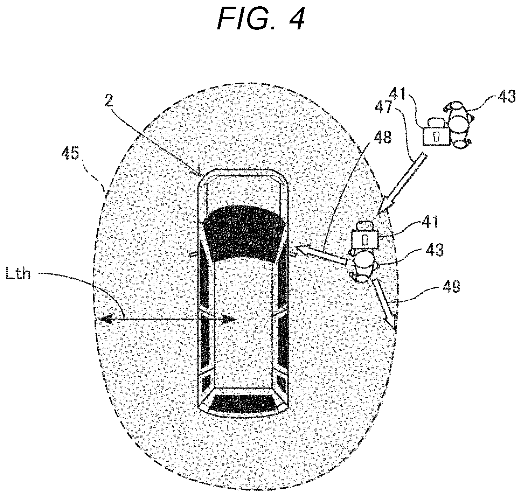

After executing the processing of S7, the CPU 31 ends the processing shown in Fig. 3. Fig. 4 is a plan view showing a behavior of a user 43 carrying the portable device 41 and a range of the threshold distance Lth from the vehicle 2. A range 45 of a dashed circle with hatching in Fig. 4 indicates the range of the threshold distance Lth from the vehicle 2. For example, as indicated by an arrow 47 in Fig. 4, when the portable device 41 (the user 43 carrying the portable device 41) moves from outside the range 45 of the threshold distance Lth from the vehicle 2 into the range 45, the CPU 31 starts the processing of Fig. 3, makes an affirmative determination in S1 (S1: YES), and executes S2. Thereafter, when the user 43 stops within the certain range Rth for the reference time Tth or longer (S5: YES), the processing of Fig. 3 ends.

When the CPU 31 detects that the position of the portable device 41 is changed after the processing of Fig. 3 is ended, the CPU 31 may start the processing of Fig. 3 again. For example, the processing of Fig. 3 may be started again when the user 43 once moves into the range 45 and then stops within the certain range Rth for the reference time Tth or longer, and after the processing of Fig. 3 ends (S5: YES, S7), the user 43 starts moving from that location. After the processing of Fig. 3 is ended, the CPU 31 may start the processing of Fig. 3 again not only when the position of the portable device 41 is changed but also when it is detected that the portable device 41 starts to move in a direction approaching the vehicle 2. For example, as indicated by an arrow 48, after the user 43 carrying the portable device 41 moves into the range 45 and stops, and after the reference time Tth elapses, the user 43 starts moving again and moves in the direction approaching the vehicle 2, and the CPU 31 may start the processing of Fig. 3. In this case, the CPU 31 makes an affirmative determination in S1 (S1: YES) and executes S2. On the other hand, as indicated by an arrow 49, when it is detected that after the user 43 carrying the portable device 41 moves into the range 45 and stops, and after the reference time Tth elapses, the user 43 starts moving again and moves in a direction away from the vehicle 2, the processing of Fig. 3 may not be started again. Therefore, the CPU 31 may activate each camera (S2) and execute S3 and subsequent steps when it is detected that the portable device 41 has moved into the range 45 from the outside of the range 45 of the predetermined distance (threshold distance Lth) from the vehicle 2 or that the portable device 41 present in the range 45 has moved in the direction approaching the vehicle 2.

On the other hand, when the reference time Tth has not elapsed (S5: NO), the CPU 31 executes S3 again. When the portable device 41 moves out of the certain range Rth before the reference time Tth elapses (S5: NO), for example, when the user 43 who has stopped within the range 45 starts moving again before the reference time Tth elapses, the CPU 31 executes S3 again. When the portable device 41 moves out of the certain range Rth before the reference time Tth elapses (when the position of the portable device 41 changes), the CPU 31 resets the measured elapsed time and determines the elapsed time and the certain range Rth based on the changed position (S5).

When a person is detected from the imaging data obtained by imaging the position of the portable device 41, that is, when a person is present at the position of the portable device 41, the CPU 31 makes an affirmative determination in S3 (S3: YES) and executes S4. In S4, the CPU 31 determines whether a person (hereinafter, referred to as the user 43) present at the position of the portable device 41 has a use intention (S4). For example, in S4, the CPU 31 determines whether the user 43 has a use intention based on a motion of the shoulder of the user 43. The CPU 31 detects a shoulder angle of the user 43 (such as an angle formed by a straight line connecting both shoulders of the user 43 with respect to a side surface of the vehicle 2) based on the imaging data (such as the overhead image) of each camera. The CPU 31 determines that the user 43 has a use intention when it is detected that the user 43 faces the vehicle 2 and the user 43 approaches the vehicle 2 based on the detected shoulder angle and a position of the user 43. For example, the use intention information DB 35 (see Fig. 2) stores a threshold angle for determining whether the detected shoulder angle is an angle at which the user 43 has a use intention. The method of determining the use intention is not limited to the above-described method using the shoulder angle. For example, the CPU 31 may determine whether the user 43 has a use intention, based on information on whether the user 43 is carrying baggage, information on an orientation of the face of the user 43, information on a position at which a movement speed of the user 43 is decelerated or a deceleration amount, information on a position at which the user 43 is likely to stop, information on a position at which the user 43 has stopped, information on a movement direction of the user 43, information on the line of sight of the user 43, or the like.

When the CPU 31 determines that the user 43 has no use intention (S4: NO), the CPU 31 executes S7 and ends the processing shown in Fig. 3. Accordingly, it is possible to prevent the door of the vehicle 2 from being opened without permission, for example, when the user 43 happens to pass near the vehicle 2 or comes to take something near the vehicle 2, other than the purpose of using the vehicle 2.

When the CPU 31 determines that there is a use intention (S4: YES), the CPU 31 executes S8. The CPU 31 estimates a target door scheduled to be opened by the user 43 for the user 43 determined to have a use intention in S8. For example, the CPU 31 estimates the target door based on the position of the user 43 at the time when the motion of the shoulder of the user 43 changes and it is determined that the user 43 has a use intention. In the present specification, the intention to use the vehicle is not limited to an intention to open each door and get in the vehicle, and includes an intention to open each door and work without getting in the vehicle, such as an intention to open each door and put a package, and an intention to take out a package. Therefore, the door in the present specification includes the back door 14.

For example, the CPU 31 estimates, as the target door, the door closest to the position of the user 43 at the time when the motion of the shoulder changes and it is determined that the user 43 has a use intention. The method of estimating the target door is not limited to the above-described method. For example, the CPU 31 may estimate the target door based on information such as a movement direction, a deceleration position, a line of sight, a body orientation, and baggage of the user 43, in addition to or instead of the motion of the shoulder. For example, the CPU 31 may predict the movement direction of the user 43 and estimate a door ahead in the movement direction as the target door. Alternatively, the CPU 31 may calculate, for each door of the vehicle 2, a total value of values obtained by multiplying the above-described information (information such as the baggage, the line of sight, or the like) by a weight coefficient, and estimate a door whose calculated total value exceeds a predetermined threshold as the target door.

When the target door is estimated in S8, in S9, the CPU 31 executes the control for opening the target door estimated in S8. The CPU 31 releases the door locking of the target door and executes the control for opening the door. For example, when the target door is the front door 12R, the CPU 31 controls the door lock device 15A to release the door locking of the front door 12R, and then controls the door opening and closing device 16A to execute control for opening the front door 12R. Accordingly, the user 43 can cause the vehicle 2 to open the desired door only by carrying the portable device 41 and approaching the vehicle 2. After executing the processing of S9, the CPU 31 ends the processing of Fig. 3.

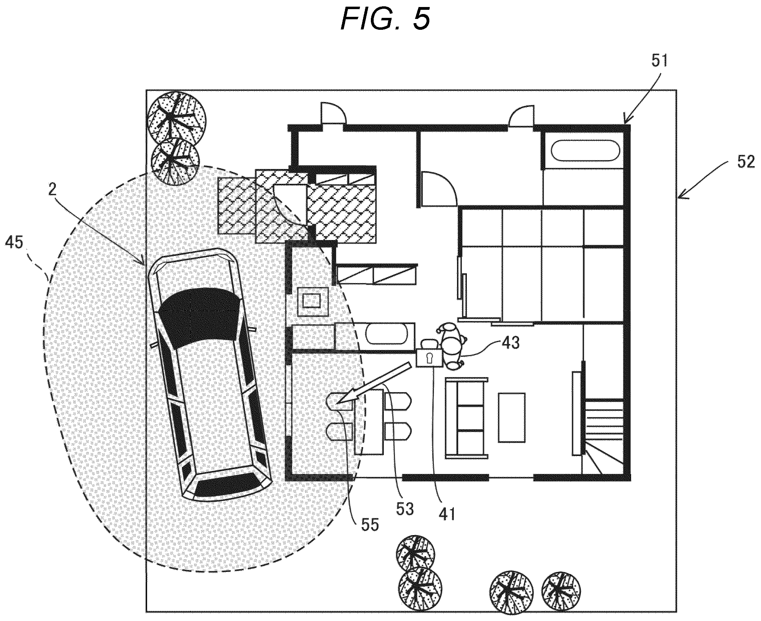

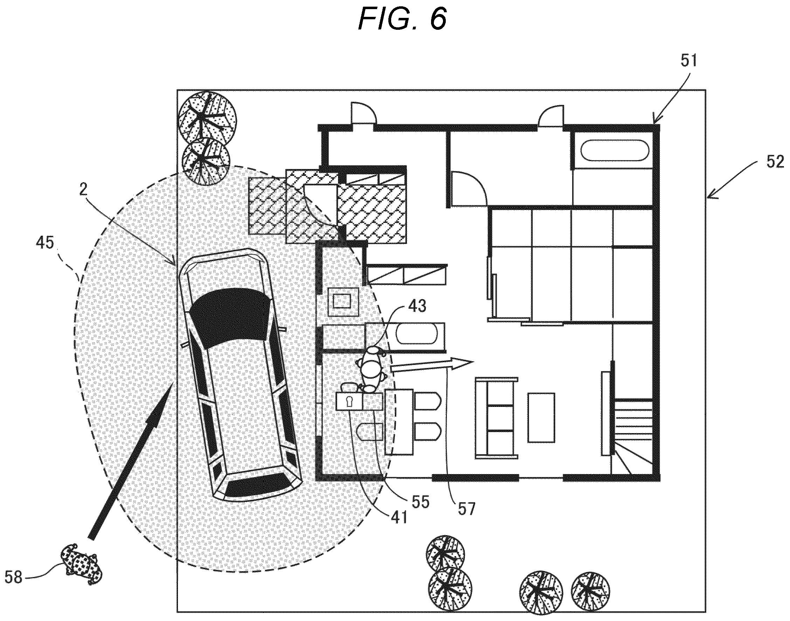

As an example, Figs. 5 to 7 are plan views showing a positional relationship among the vehicle 2 parked in a site 52 of a home 51, the user 43 who is an owner of the vehicle 2, and the portable device 41. For example, as indicated by an arrow 53 in Fig. 5, it is assumed that the user 43 moves a bag (not shown) containing the portable device 41 in the home 51 and brings the bag to a chair 55 in a dining room. Accordingly, the portable device 41 moves to a position at which the radio waves are detected by the vehicle 2, and moves from the outside of the range 45 to the inside of the range 45. Next, as indicated by an arrow 57 in Fig. 6, it is assumed that the user 43 moves to another place while placing the bag containing the portable device 41 on the chair 55. In this case, it is considered that the user 43 merely moves the bag in the home 51 and has no intention to use the vehicle 2 or has no intention to use the vehicle 2 immediately.

When the user 43 performs actions of the arrows 53 and 57 described above, the CPU 31 activates each camera as the portable device 41 approaches (S1: YES, S2), and determines whether a person is present at the position of the portable device 41 (in this case, a position or direction of the chair 55) in S3. The user 43 is moving to another place after placing the portable device 41 on the chair 55. The portable device 41 is placed indoors, and a wall or a window of the home 51 is present between the vehicle 2 and the portable device 41. Therefore, the CPU 31 cannot detect a person from imaging data obtained by imaging the position of the portable device 41. The CPU 31 makes a negative determination in S3 (S3: NO) and executes S5. By adjusting a threshold or the like for determining whether the CPU 31 can detect a person from the imaging data, even if the user 43 is imaged through the window and a part of the human body is detected, adjustments can be made to determine that no person is detected. That is, a criterion for determining whether a person is present at the position of the portable device 41 in S3 can be changed as appropriate. Specifically, when an object other than the person, such as a wall or a window, is sandwiched between the vehicle 2 and the person at the position of the portable device 41, the CPU 31 may determine that the person is not present at the position of the portable device 41 in S3 (S3: NO), or may determine that the person is present when the whole body of the person can be detected from the imaging data (S3: YES).

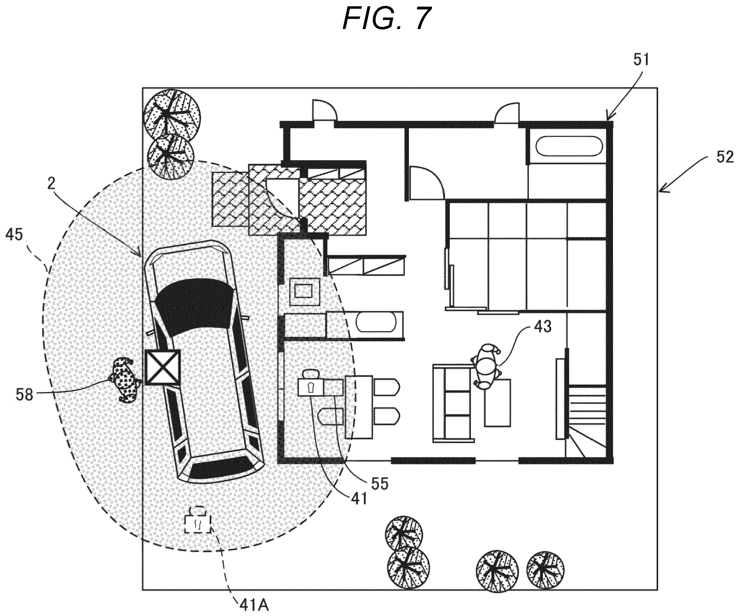

When a state where the portable device 41 is placed on the chair 55 for the reference time Tth or longer is maintained (S5: YES), the CPU 31 executes S7 and ends the processing of Fig. 3. Accordingly, when the user 43 does not have the use intention, the processing of Fig. 3 can be ended before determining the use intention (before executing S4). As shown in Fig. 6, it is assumed that the user 43 moves to another place while keeping the portable device 41 on the chair 55, and another person 58 who is not the owner of the vehicle 2 approaches the vehicle 2 in a state where each camera of the vehicle 2 is activated (S2, S3: NO, S5: NO). In S3, the CPU 31 makes a negative determination in S3 (S3: NO) because no person is present at the position of the portable device 41 even if the person (another person 58) is present within the range 45. As a result, as shown in Fig. 7, even when another person 58 approaches the vehicle 2, for example, even when another person 58 takes an action indicating a use intention, the locking of the vehicle 2 is not released, and another person 58 cannot get in the vehicle 2. Accordingly, it is possible to prevent theft or the like of the vehicle 2. It is possible to prevent the door from opening when another person approaches the vehicle 2 at a place not intended by the owner (the user 43) of the vehicle 2.

It is assumed that the user 43 accidentally drops a portable device 41A near the vehicle 2 as in the portable device 41A indicated by a broken line in Fig. 7. In this case, since no person is present at a position of the portable device 41A, the CPU 31 makes a negative determination in S3 (S3: NO). When the portable device 41A is left at the same position for the reference time Tth or longer after each camera is activated (S2), the CPU 31 ends the processing of Fig. 3, so that occurrence of theft or the like of the vehicle 2 can be prevented. By stopping each camera (S7), power consumption can be reduced. Accordingly, the CPU 31 can appropriately open and close the door of the vehicle 2 based on a positional relationship between the portable device 41 (the key of the vehicle 2) and the user 43.

### Effects of First Embodiment

As described above in detail, the first embodiment has the following effects. (1) According to the vehicle door control device 1 and a computer program executed by the vehicle door control device 1 according to the first embodiment, the CPU 31 of the ECU 10 detects that the portable device 41 is present within the range 45 of the threshold distance Lth from the vehicle 2 (S1: YES), and executes the control for opening the target door (S9) based on detecting that a person is present at the detected position of the portable device 41 (S3: YES).

Accordingly, even when the portable device 41 is present within the range 45 of the predetermined distance (threshold distance Lth) from the vehicle 2, the control for opening each door is not executed unless a person (the user 43) is present at the position of the portable device 41. It is possible to prevent the door from being opened due to another person 58 who is not the owner of the vehicle 2 approaches the vehicle 2. The owner of the vehicle 2 (the user 43), his/her family, or the like) can cause the vehicle 2 to open the target door only by carrying the portable device 41 and approaching the vehicle 2.

(2) When the CPU 31 detects that the portable device 41 has moved from the outside of the range 45 of the threshold distance Lth from the vehicle 2 to the inside of the range 45 (the arrow 47 in Fig. 4) or that the portable device 41 present within the range 45 of the threshold distance Lth from the vehicle 2 has moved in the direction approaching the vehicle 2 (the arrow 48 in Fig. 4) (S1: YES), the CPU 31 activates each camera (S2). Accordingly, it is possible to reduce power consumption by stopping each camera until a person approaches the vehicle 2 or a person, who has once approached, approaches the vehicle 2 again. The CPU 31 may be configured to detect only one of movement of the arrow 47 and movement of the arrow 48. For example, the CPU 31 may be configured not to start the processing of Fig. 3 until the portable device 41 moves out of the range 45 after the portable device 41 moves into the range 45 once.

After activating each camera (S2), the CPU 31 stops each camera (S7) when the portable device 41, whose position has been detected, continues being present within the certain range Rth for the predetermined reference time Tth or longer (S5: YES). Accordingly, in a case where the portable device 41 is continuously placed in a key storage place or the like, or in a case where the portable device 41 is dropped near the vehicle 2, it is possible to stop each activated camera and reduce the power consumption. The CPU 31 may activate and stop the person detection unit 31B in accordance with the activation and stop of each camera.

(3) When the CPU 31 detects that the portable device 41 is present within the range 45 of the threshold distance Lth from the vehicle 2 and detects that no person is present at the detected position of the portable device 41 (S3: NO), the CPU 31 maintains the locked state of each door of the vehicle 2 (S5: YES, S7).

According to this, when the portable device 41 is placed at a position close to the vehicle 2 in the home 51, or when the portable device 41 is dropped near the vehicle 2, the locked state of the vehicle 2 can be maintained. Even if each camera of the vehicle 2 is activated and the authentication of S3 is executed, the locked state can be maintained because no person is present at the position of the portable device 41, and the occurrence of theft or the like of the vehicle 2 can be prevented.

(4) When the CPU 31 detects that the portable device 41 is present within the range 45 of the threshold distance Lth from the vehicle 2 and detects that a person is present at the detected position of the portable device 41 (S3: YES), the CPU 31 determines whether the detected person intends to use the vehicle 2 (S4). When the CPU 31 determines that there is a use intention (S4: YES), the CPU 31 opens the target door (S9).

Accordingly, by checking whether a person is present at the position of the portable device 41 using each camera before determining the use intention of the vehicle 2, it is possible to prevent another person 58 from approaching the vehicle 2 and illegally using the vehicle 2 at a place not intended by the owner of the vehicle 2. After it is checked that the user 43 carrying the portable device 41 has approached the vehicle 2 to a certain distance (threshold distance Lth) (S1: YES, S3: YES), the use intention is determined (S4), so that the determination accuracy of the use intention can be improved.

### Second Embodiment

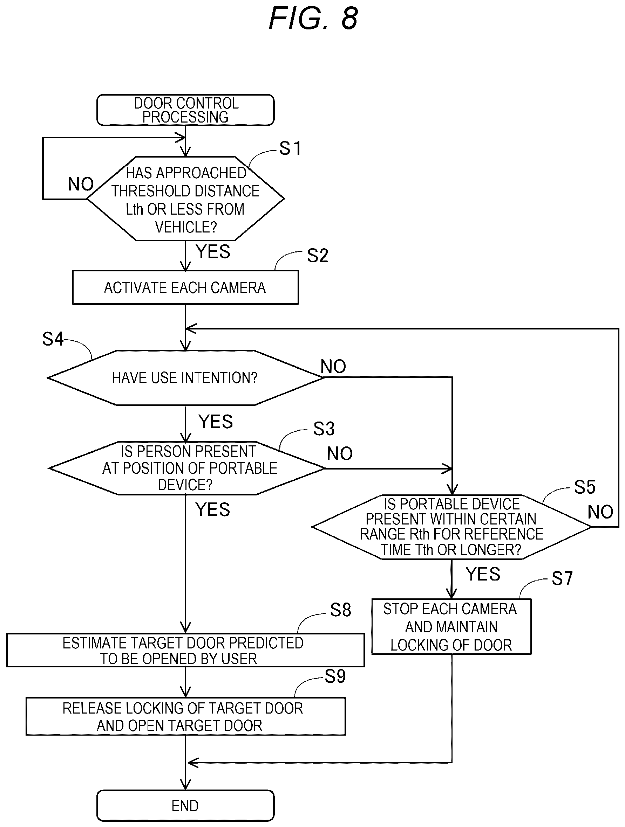

Next, a second embodiment disclosed here will be described. In the first embodiment described above, as shown in Fig. 3, when a person is present at the position of the portable device 41 (S3: YES), the CPU 31 determines whether the person has a use intention (S4). On the other hand, as shown in Fig. 8, the CPU 31 of the second embodiment is different from that of the first embodiment in that it is determined whether a person is present at the position of the portable device 41 (S3) when it is determined that there is a use intention (S4: YES). In the following description of the second embodiment, the same components as those of the first embodiment are denoted by the same reference signs.

As shown in Fig. 8, the CPU 31 executes S1 and S2 as in the first embodiment, and then executes S4 unlike the first embodiment. For example, the CPU 31 determines whether there is a use intention based on the motion of the shoulder of the person present within the range 45 of the threshold distance Lth from the vehicle 2 (S4). When a plurality of persons are present in the range 45, the CPU 31 may determine a use intention for each of the plurality of persons. The CPU 31 executes S3 when it is determined that there is a use intention (S4: YES), and executes S5 when it is determined that there is no use intention (S4: NO). In S3, the CPU 31 determines whether a person is present at the position of the portable device 41. For example, the CPU 31 determines whether the person, who has been determined to have a use intention in S4, is present at the position of the portable device 41. When the person is present at the position of the portable device 41 (S3: YES), the CPU 31 executes S8 and subsequent steps to open the target door (S9). When there is no person at the position of the portable device 41 (S3: NO), the CPU 31 executes S5.

When the reference time Tth has not elapsed (S5: NO) or when the portable device 41 has moved out of the certain range Rth before the reference time Tth has elapsed (S5: NO), the CPU 31 executes S4 again. As in the second embodiment shown in Fig. 8, even in the configuration in which the use intention is determined first, it is possible to prevent the occurrence of theft or the like of the vehicle 2 by another person 58 (see Figs. 6 and 7). When the user 43 who is the owner of the vehicle 2 approaches the vehicle 2 while carrying the portable device 41, the CPU 31 can determine the use intention and open the target door.

It is to be understood that this disclosure is not limited to the above-described embodiment, and various improvements and modifications can be made without departing from the scope of this disclosure. • For example, a content of each processing of the door control processing program shown in Figs. 3 and 8 and an order of execution thereof are examples and can be changed as appropriate.

For example, the CPU 31 may not execute the processing of S1 or the processing of S5. For example, the CPU 31 may start the processing of Fig. 3 when the radio waves of the portable device 41 are detected, execute S2 without executing (omitting) S1, and activate each camera. For example, in the first embodiment of Fig. 3, the CPU 31 may execute S3 again without executing S5 when a negative determination is made in S3 (S3: NO), and may end the processing of Fig. 3 when S3 is executed for a certain time (S3: NO). Similarly, for example, in the second embodiment of Fig. 8, the CPU 31 may execute S4 again without executing S5 when a negative determination is made in S4 (S4: NO), and may end the processing of Fig. 8 when S4 is executed for a certain time (S4: NO). • The predetermined distance in the present specification is not limited to the threshold distance Lth. For example, the predetermined distance in this specification may be a distance at which the radio waves of the portable device 41 can be detected from the vehicle 2. • In each embodiment, the CPU 31 may not execute the determination of the use intention in S4. For example, in the first embodiment, when a person is present at the position of the portable device 41 in S3 (S3: YES), the CPU 31 may open the target door (S8 and S9) without executing S4. • In each embodiment, the CPU 31 may not execute the processing of estimating the target door in S8. For example, in the first embodiment, when the CPU 31 determines in S4 that there is a use intention (S4: YES), the CPU 31 may release the locking of all the doors in S9 without executing S8.

In the first embodiment, as shown in Fig. 3, after it is determined whether a person is present at the position of the portable device 41 (S3: YES), it is determined whether there is a use intention (S4). In the second embodiment, as shown in Fig. 8, after it is determined whether there is a use intention (S4: YES), it is determined whether a person is present at the position of the portable device 41 (S3). However, whether a person is present at the position of the portable device 41 may be determined both before and after the use intention is determined.
- In each of the above embodiments, the processing is executed for the walking user 43 as a target, but this disclosure is not limited thereto. For example, even when the user 43 is in a wheelchair, the target door may be controlled according to whether a person is present at the position of the portable device 41. Therefore, the movement in the present specification is not limited to walking, and may be movement by the wheelchair. • In each of the above embodiments, the ECU 10 of the vehicle door control device 1 executes the processing of the door control processing program (Figs. 3 and 8), but an execution subject may be changed as appropriate. For example, the processing in Figs. 3 and 8 may be executed by a control unit of a car navigation device and other in-vehicle devices. • The configuration of the vehicle door control device 1 is not limited to the configuration of each of the above embodiments. For example, the vehicle door control device 1 may include only the ECU 10 or may include only the ECU 10 and each camera.

Next, technical ideas derived from the contents of the above embodiment will be described. (A) The vehicle door control device according to claim 1 or 2, wherein
the control unit
determines whether a person present around the vehicle has an intention to use the vehicle when the position detection unit detects that a key of the vehicle is present within a range of a predetermined distance from the vehicle, and
determines whether a person is present at a position of the key of the vehicle detected by the position detection unit when it is determined that the person has an intention to use the vehicle.

Accordingly, it is possible to determine whether a person is present at the position of the key only when it is determined that there is a use intention. When a person is present, control for opening the door can be executed.

## Claims

1. A vehicle door control device (1) comprising:
a position detection unit (31A) configured to detect a position of a key of a vehicle;
a person detection unit (31B) configured to detect a person present around the vehicle; and
a control unit (31C) configured to execute control for opening a door of the vehicle based on detection by the position detection unit that the key of the vehicle is present within a range of a predetermined distance from the vehicle and detection by the person detection unit that the person is present at the position of the key of the vehicle detected by the position detection unit.

2. The vehicle door control device according to claim 1, wherein
the control unit
activates the person detection unit when the position detection unit detects that the key of the vehicle moves from outside the range of the predetermined distance from the vehicle to within the range or the key of the vehicle present within the range of the predetermined distance from the vehicle moves in a direction approaching the vehicle, and
stops the person detection unit when the key of the vehicle detected by the position detection unit continues being present within a certain range for a predetermined reference time or longer after the person detection unit is activated.

3. The vehicle door control device according to claim 1 or 2, wherein
when the position detection unit detects that the key of the vehicle is present within the range of the predetermined distance from the vehicle, and when the person detection unit detects that no person is present at the position of the key of the vehicle detected by the position detection unit, the control unit maintains the door of the vehicle in a locked state.

4. The vehicle door control device according to claim 1 or 2, wherein
the control unit
determines whether the person detected by the person detection unit has an intention to use the vehicle when the position detection unit detects that the key of the vehicle is present within the range of the predetermined distance from the vehicle and when the person detection unit detects that the person is present at the position of the key of the vehicle detected by the position detection unit, and
executes control for opening the door when it is determined that the person has the intention to use the vehicle.
